Europäisches Patentamt

European Patent Office

Office européen des brevets

(19)

(11) Numéro de publication : **0 368 400 B1**

(12) **FASCICULE DE BREVET EUROPEEN**

(45) Date de publication du fascicule du brevet :
**10.05.95 Bulletin 95/19**

(51) Int. Cl.$^6$ : **H04N 7/24**

(21) Numéro de dépôt : **89202771.5**

(22) Date de dépôt : **03.11.89**

(54) Codage, décodage et système de transmission d'images de télévision.

(30) Priorité : **08.11.88 FR 8814559**
**03.03.89 FR 8902798**

(43) Date de publication de la demande :
**16.05.90 Bulletin 90/20**

(45) Mention de la délivrance du brevet :
**10.05.95 Bulletin 95/19**

(84) Etats contractants désignés :
**AT BE DE FR GB SE**

(56) Documents cités :
**EP-A- 0 259 562**
**EP-A- 0 279 053**
**EP-A- 0 289 051**
**DE-A- 3 437 182**
**FR-A- 2 604 049**
**GB-A- 2 195 216**
**US-A- 4 727 421**
**US-A- 4 751 587**

(56) Documents cités :
**PROCEEDINGS OF THE SOCIETY OF PHO-TO-OPTICAL INSTRUMENTATION ENGI-NEERS (SPIE),Cannes, décembre 1985, vol. 594, pages 119-128, Image Coding (SPIE conférenceB594); G. KUMMERFELDT et al.: "Coding television signals at 320 and 64 kbit/s"**
**PATENT ABSTRACTS OF JAPAN, vol. 7, no. 8 (E-152)[1153], 13 janvier 1983; & JP-A-57 166 785**

(73) Titulaire : **LABORATOIRES D'ELECTRONIQUE PHILIPS**
**3, Avenue Descartes**
**F-94450 Limeil-Brévannes (FR)**
(84) **FR**
Titulaire : **Philips Electronics N.V.**
**Groenewoudseweg 1**
**NL-5621 BA Eindhoven (NL)**
(84) **BE DE GB SE AT**

(72) Inventeur : **Chantelou, Olivier Société Civile S.P.I.D.**
**209, rue de l'Université**
**F-75007 Paris (FR)**
Inventeur : **Lhuillier, Jean-Jacques Société Civile S.P.I.D.**
**209, rue de l'Université**
**F-75007 Paris (FR)**

(74) Mandataire : **Landousy, Christian et al Société Civile S.P.I.D.**
**156, Boulevard Haussmann**
**F-75008 Paris (FR)**

EP 0 368 400 B1

Jouve, 18, rue Saint-Denis, 75001 PARIS

## Description

La présente invention concerne un dispositif de codage d'images de télévision constituées de trames entrelacées et organisées en blocs d'informations, comprenant notamment un étage d'estimation de mouvement, un étage de contrôle d'estimation de mouvement, un étage de codage, et un étage de multiplexage. Elle concerne aussi un dispositif de décodage correspondant, permettant le décodage des signaux ainsi codés.

L'invention concerne également un système incorporant de tels dispositifs et destiné à la transmission d'images de télévision par l'intermédiaire d'un canal numérique à bande passante limitée impliquant un traitement de réduction de la quantité d'informations à transmettre. Elle concerne enfin les étages d'émission et de réception d'un tel système.

La transmission ou l'enregistrement d'images de télévison sous forme numérique exige en effet, si l'on transmet les signaux vidéo tels qu'ils sont après numérisation, une bande passante huit fois plus importante qu'en analogique. Une telle transmission numérique à travers un canal à bande étroite implique une très importante réduction du débit binaire nécessaire à la représentation des images.

Les techniques permettant cette réduction de débit peuvent exploiter la corrélation présente à l'intérieur de chaque image. Le brevet US-A-4 394 774 décrit un exemple de technique de codage par blocs, à base de transformation en consinus discret, qui exploite très efficacement cette corrélation spatiale. Cependant une réduction supplémentaire du débit exige la prise en compte de la corrélation existant entre images, en particulier sur les zones fixes ou sur les zones en mouvement.

On connaît également des techniques prédictives à compensation de mouvement, qui permettent de réduire le débit à peu près jusqu'à 1 bit par élément d'image (pixel), sans dégradation gênante de la qualité des images décodées : on met par exemple en jeu une boucle d'image à image, c'est-à-dire que, pour transmettre un bloc de chaque image, on code soit le bloc lui-même, soit la différence entre ce bloc et un bloc provenant de l'image précédente codée et décodée. Cette technique implique donc que, pour décoder une image dans le récepteur, il faille disposer de cette image précédente codée et décodée.

Ce type de codage ne peut donc pas être utilisé pour enregistrer des séquences d'images sur un magnétoscope, dont une des propriétés essentielles est la possibilité de balayer rapidement la bande magnétique tout en visualisant des images. En effet, cette caractéristique implique le décodage d'une image à partir des données correspondant à cette image, et uniquement celles-là, ce qui élimine toute technique faisant appel à une quelconque récursivité d'image à image.

Le but de l'invention est de proposer un dispositif de codage qui utilise certes la redondance d'image à image pour réduire le débit, mais en permettant la réalisation de la fonction de recherche rapide sur magnétoscope, c'est-à-dire en n'utilisant pas de boucle de prédiction d'image à image, et pour lequel il est donc d'autant plus important de disposer d'une détermination précise d'informations de mouvement entre images successives.

L'invention concerne à cet effet un dispositif de codage tel que défini dans le préambule de la description et qui est en outre caractérisé en ce que l'étage d'estimation de mouvement comprend :

(1) des moyens de détermination de vecteurs de déplacement, prévus pour recevoir lesdites images d'origine et délivrer des vecteurs de déplacement associés à chacun desdits blocs et comprenant eux-mêmes deux circuits à retard pour la synchronisation de trois trames successives et un circuit d'estimation de mouvement incluant lui-même trois circuits d'interpolation verticale et un circuit de détermination de vecteurs de déplacement par une méthode telle que celle de corrélation par bloc ;

(2) des moyens de conversion de format, comprenant eux-mêmes un circuit d'interpolation intra-trame et un circuit d'interpolation inter-trames étant selectionnés l'un ou l'autre selon la parité de la composante verticale de chaque vecteur de déplacement déterminé, pour délivrer, à partir des images d'origine et desdits vecteurs de déplacement qui leur sont associés par bloc, des trames séquentielles distinctes selon la nature desdits vecteurs de déplacement.

La structure ainsi proposée permet une construction optimale (en matière de résolution) des lignes des images séquentielles présentes en sortie des moyens de conversion de format, puisqu'une interpolation de nature différente (intra-trame ou inter-trame) est effectuée selon la parité de la composante verticale des vecteurs de déplacement. On notera également que, malgré la présence, au décodage, d'une interpolation temporelle compensée en mouvement pour la reconstruction des images manquantes à partir des images précédente et suivante qui ont été transmises, le codage à base de transformation en cosinus travaille dans ce cas sur une image non entrelacée, c'est-à-dire qui ne contient aucun mouvement inter-trame. La structure proposée est donc compatible avec le mode "recherche rapide avec visualisation" des magnétoscopes, car elle permet de décoder une image sur un horizon de travail limité à 40 millisecondes, c'est-à-dire chaque image indépendamment des autres, tout en maintenant une très bonne qualité d'image décodée.

La demande de brevet européen EP-A-0279053 décrit bien un dispositif de codage comprenant des éléments similaires à ceux prévus dans le cas de la présente invention, mais, dans ce dispositif antérieur, les moyens de conversion de format ne sont pas exposés en détail et ne peuvent donc pas même suggérer la structure particulière adoptée ici, à savoir celle qui permet, à partir des images d'origine et des vecteurs de déplacement préalablement déterminés dans l'étage d'estimation de mouvement, de délivrer en sortie dudit étage des trames différentes selon la parité de la composante verticale du vecteur de déplacement associé à chaque bloc.

La conversion de format entrelacé-séquentiel ainsi obtenue n'est pas décrite non plus dans la demande de brevet français FR-A-2604049, dans laquelle le processus de détermination de chaque vecteur de déplacement est réalisé par estimation d'un extremum d'une fonction de corrélation, sans que la parité dudit vecteur joue le mondre rôle.

Dans un mode de réalisation particulièrement avantageux, le dispositif de codage selon l'invention est caractérisé en ce que, lesdites trois trames successives étant appelées $T_{2n-1}$, $T_{2n}$, $T_{2n+1}$, il comprend également :

(a) un circuit d'interpolation temporelle, recevant d'une part la trame de sortie $T_{2n}$ du premier circuit à retard et la trame de sortie $T'_{2n}$ desdits moyens de conversion de format et d'autre part le vecteur de déplacement DS de sortie du circuit d'estimation de mouvement pour délivrer une nouvelle trame $T''_{2n-1}$ correspondant spatialement et temporellement à ladite trame $T_{2n-1}$, compte tenu de la direction du mouvement ;

(b) un circuit de contrôle d'erreur d'interpolation, recevant ladite trame d'origine $T_{2n-1}$ et ladite nouvelle trame interpolée $T''_{2n-1}$ pour délivrer un signal MOD d'indication de mode de transmission lié à la qualité de l'interpolation réalisée et destiné à commander lesdits étages de codage et de multiplexage.

Dans ce dernier mode de réalisation, la structure proposée est avantageuse notamment en ce sens que le traitement des signaux à coder est effectué essentiellement non pas à l'occasion même du codage mais en amont des moyens de codage spatial, qui peuvent ainsi être mis en commun pour traiter soit l'image séquentielle, en mode dit normal, soit la trame d'origine associée à des informations additionnelles délivrées par le circuit de contrôle d'erreur d'interpolation. Ce traitement est donc une sorte de prétraitement des signaux que doivent recevoir ces moyens de codage, grâce auquel on insère dans les trames séquentielles, par l'intermédiaire d'un étage de multiplexage de structure appropriée, des informations destinées à permettre la correction des trames interpolées au niveau du récepteur. Ce multiplexage supprime, de fait, tout traitement qui serait spécifique aux signaux de contrôle d'erreurs d'interpolation, sans modifier les moyens de codage spatial par rapport auxquels la distinction entre mode interpolé et mode non interpolé devient donc, en quelque sorte, transparente.

Les particularités de l'invention apparaîtront maintenant de façon plus détaillée dans la description qui suit et dans les dessins annexés, donnés à titre d'exemples non limitatifs et dans lesquels :

- les figures 1 et 3 montrent respectivement un exemple de réalisation d'un dispositif de codage d'images selon l'invention et un exemple de dispositif de décodage qui lui correspond ;
- la figure 2 montre un mode de réalisation particulier de l'étage d'estimation de mouvement du dispositif de codage de la figure 1 ;
- la figure 4 montre un mode de réalisation particulier du circuit de décodage spatial et d'interpolation temporelle du dispositif de décodage de la figure 3.
- la figure 5 montre une réalisation préférentielle de l'étage d'estimation de mouvement, et la figure 6 montre alors, dans ce cas, une réalisation du dispositif de décodage correspondant à un dispositif de codage incluant ladite réalisation préférentielle.

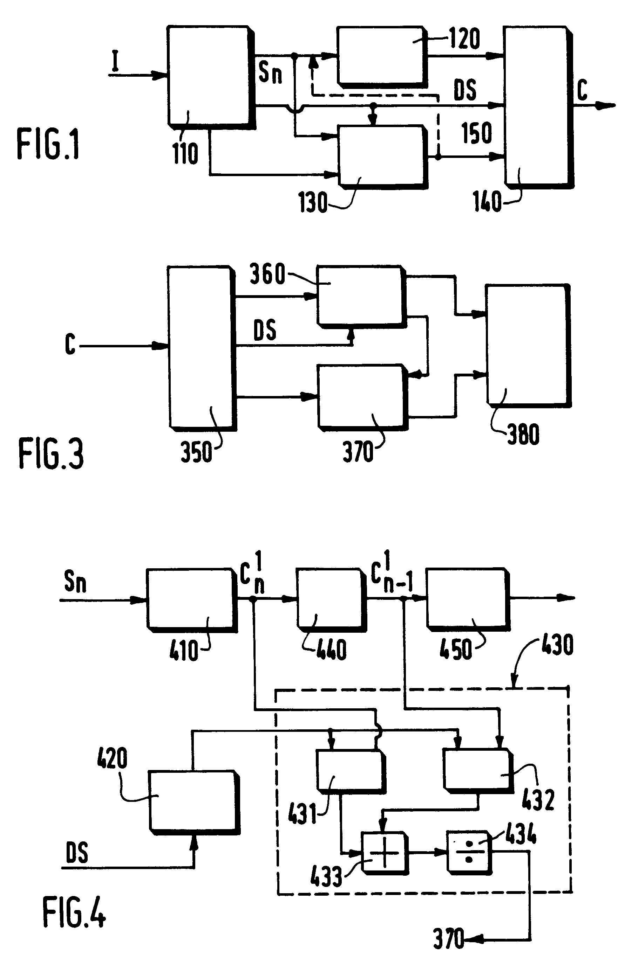

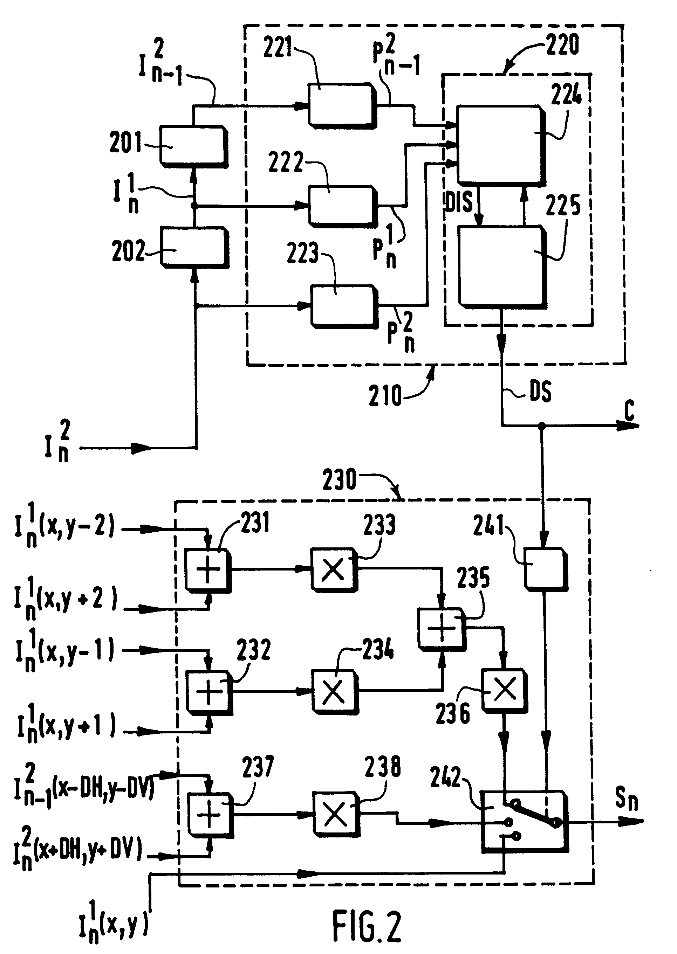

Dans l'exemple de réalisation représenté sur la figure 1, le dispositif de codage selon l'invention comprend tout d'abord un étage 110 d'estimation de mouvement. Cet étage 110, qui comprend d'une part des moyens de détermination de vecteurs de déplacement, prévus pour recevoir les images d'origine et délivrer des vecteurs de déplacement associés à chacun des blocs d'images, et d'autre part des moyens de conversion de format, prévus pour recevoir les images d'origine et lesdits vecteurs et délivrer des trames séquentielles distinctes selon la nature desdits vecteurs, est représenté dans un mode particulier de réalisation sur la figure 2.

L'étage 110 reçoit comme signaux d'entrée des images 50Hz entrelacées au sujet desquelles on adoptera les notations suivantes :

- n est un indice désignant le numéro ou le rang d'une image I entière, c'est-à-dire comprenant deux trames et occupant elle-même 40 millisecondes ;
- $I_n^1$ désigne la première trame d'une telle image, de rang n;
- $I_n^2$ désigne la deuxième trame de cette n-ième image.

L'étage 110 comprend, comme indiqué sur la figure 2, un circuit d'estimation de mouvement 210 qui reçoit les trois trames suivantes : la trame courante $I_n^2$, la trame précédente $I_n^1$ de la même image de rang n, la deuxième trame $I_{n-1}^2$ de l'image précédente de rang n-1. Des circuits à retard 201 et 202, imposant ici chacun un retard de 20 millisecondes, permettent de retarder de façon appropriée les trames $I_n^1$ (de 20 millisecondes) et $I_{n-1}^2$ (de 40 millisecondes) par rapport à $I_n^2$, pour que ces trois trames soient reçues en synchronisme par le circuit 210 d'estimation de mouvement.

Le circuit d'estimation 210 comprend lui-même un circuit 220 de détermination de vecteur de déplacement par une méthode telle que celle de corrélation par bloc. Ce circuit 220 reçoit les trois trames $I_{n-1}^2$, $I_n^1$, $I_n^2$ (synchronisées comme on vient de le voir) par l'intermédiaire de trois circuits 221, 222, 223 d'interpolation verticale dans la trame, permettant une conversion de format entrelacé/séquentiel, c'est-à-dire dans le cas présent de passer d'un format de 288 lignes à 576 lignes. Ce sont les trames de sortie de ces trois circuits 221 à 223, appelées respectivement $P_{n-1}^2$, $P_n^1$, $P_n^2$, qui sont envoyées sur les trois entrées en parallèle du circuit 220 de détermination de vecteur de déplacement.

Dans ce circuit 220, un circuit de calcul de distorsion 224 délivre une valeur de distorsion DIS (formule (1) donnée en annexe) qui est fournie à un circuit logique 225 de recherche de déplacement. Dans l'exemple de réalisation ici décrit, la distorsion associée au vecteur $(V_x, V_y)$ est donc la somme, sur le bloc considéré, du carré de la différence point à point entre la trame d'origine et le résultat de l'interpolation, compensée en mouvement selon le vecteur $(V_x, V_y)$, à partir des trames paires précédente et suivante.

Le circuit 225 présente deux sorties : l'une est renvoyée vers le circuit de calcul de distorsion 224 et représente les vecteurs de déplacement dont la distorsion DIS devra être évaluée par le circuit 224 à l'étape suivante, permettant ainsi une recherche séquentielle du meilleur vecteur de déplacement, l'autre représente le vecteur de déplacement réellement affecté à chaque bloc d'image et constitue la sortie, notée DS, du circuit 220 de détermination de vecteur de déplacement.

Ce vecteur de déplacement DS est alors envoyé d'une part vers le canal de transmission C et d'autre part vers des moyens de conversion de format, ici un circuit 230 de conversion séquentielle. Ce circuit 230 reçoit également les trames $I_{n-1}^2$, $I_n^1$, $I_n^2$, et détermine à partir de ses différentes différentes entrées une trame séquentielle notée $S_n$. Cette trame $S_n$ est construite en insérant entre chaque ligne de la trame $I_n^1$ (entrelacée) une ligne intermédiaire pour former une image contenant deux fois plus de lignes. La détermination de cette ligne supplémentaire est cependant différente suivant la parité de la composante verticale DV du vecteur de déplacement sélectionné DS.

En effet, lorsque la composante verticale DV du déplacement correspond à une valeur impaire, les informations présentes dans les trames $I_{n-1}^2$ et $I_n^2$ ne permettent pas d'améliorer la résolution verticale par rapport à une interpolation dans la trame $I_n^1$ car les informations qui seraient utilisées lors de la compensation de mouvement proviendraient, dans ce cas, déjà d'une interpolation verticale des trames $I_{n-1}^2$ et $I_n^2$. Si la composante DV est par exemple impaire, on convient donc de déterminer les points d'image de la trame séquentielle $S_n$ par simple interpolation dans la trame $I_n^1$ en n'utilisant aucune autre trame. Si au contraire la composante DV est paire, la conversion séquentielle est obtenue à partir des trames $I_{n-1}^2$ et $I_n^2$. Plus précisément, si le vecteur de déplacement DS déterminé a pour composantes horizontale et verticale DH et DV, le calcul de chaque point d'image, situé en colonne x de la ligne y, de la trame séquentielle $S_n$ à déterminer est fourni par l'expression (2) donnée en annexe.

Le circuit de conversion séquentielle 230 comprend donc, dans le premier cas, pour l'interpolation à partir de la trame $I_n^1$ seule, un filtre à quatre coefficients, $\frac{-1}{16}$, $0$, $\frac{9}{16}$, $\frac{1}{16}$, $\frac{9}{16}$, $0$, $\frac{-1}{16}$, appliqué à la trame obtenue, à partir de la trame d'origine, par insertion entre chaque ligne d'une ligne de valeurs nulles. Ce filtre interpolateur comprend à cet effet deux additionneurs 231 et 232, deux multiplicateurs 233 et 234, un additionneur 235, et un multiplicateur 236. L'additionneur 231 réalise l'opération $I_n^1(x,y-2) + I_n^1(x,y+2)$, et le multiplicateur 233 multiplie le résultat de cette addition par -1. L'additionneur 232 réalise l'opération $I_n^1(x,y-1)+I_n^1(x,y+1)$ et le multiplicateur 234 multiplie le résultat de cette addition par +9. L'additionneur 235 additionne les sorties de ces deux multiplicateurs, et le multiplicateur 236 multiplie le résultat de cette dernière addition par 1/16.

Dans le cas où DV est pair, le circuit de conversion séquentielle 230 comprend cette fois, dans l'exemple décrit, un additionneur 237 réalisant l'opération $I_{n-1}^2(x-DH,y-DV) + I_n^2(x+DH,y+DV)$, puis un multiplicateur 238 du résultat de cette addition par 1/2. Les sorties des multiplicateurs 236 et 238 sont envoyées vers un commutateur 242 qui sélectionne l'une ou l'autre de ces sorties selon la parité de la composante DV, fournie par un circuit 241 de détermination de parité recevant le vecteur de déplacement sélectionné DS. La sortie du commutateur 242 est la trame séquentielle $S_n$.

La trame séquentielle $S_n$ est alors fournie d'une part à l'étage de codage, ici un circuit de codage spatial 120, et d'autre part à l'étage de contrôle de l'estimation de mouvement, ici un circuit 130 de contrôle des erreurs d'interpolation, qui reçoit lui-même également la trame $I_{n-1}^2$ et le vecteur de déplacement sélectionné DS.

Le circuit 120 est un circuit de codage spatial de type connu, par exemple tel que celui décrit dans le brevet US-A-4394774 déjà cité, et comprend donc essentiellement un circuit de conversion de balayage, un circuit de calcul de la transformée en cosinus discret, un circuit de quantification, un circuit de codage à longueur variable, et un circuit de mémoire-tampon assurant que le débit de sortie est bien régulé.

Le circuit 130 de contrôle des erreurs d'interpolation est destiné à vérifier si les trames R qui seront reconstruites par interpolation temporelle à la réception ne vont pas présenter d'erreurs excessives. Ce contrôle est effectué pour chaque bloc d'image : si, pour un bloc déterminé, la distorsion entre les valeurs d'origine I et les valeurs interpolées R excède une valeur-limite donnée (ce qui, en réalité, se produira très rarement), l'interpolation temporelle au décodage sera inhibée par l'envoi d'un signal approprié, et des informations additionnelles, qui sont en fait des données codées résultant d'un codage spatial direct identique à celui qui vient d'être mentionné, sont alors transmises par le canal pour permettre une reconstruction correcte des trames $I^2_{n-1}$ dans le dispositif de décodage.

L'étage de multiplexage, un multiplexeur 140 dans le cas de la figure 1, reçoit les sorties des circuits 110, 120 et 130, c'est-à-dire les sorties qui correspondent aux informations à transmettre au décodeur pour permettre la reconstruction du signal vidéo, et délivre le signal à transmettre, qui comprend en série les déplacements dela trame $I^2_{n-1}$, (provenant du circuit 110), les informations de correction de la trame $I^2_{n-1}$ ou les informations additionnelles (provenant du circuit 130), et les informations résultant du codage de $S_n$ (provenant du circuit 120). La connexion 150 en trait interrompu ne concerne qu'une variante étudiée plus loin

L'invention concerne non seulement un dispositif tel que celui qui vient d'être décrit, mais aussi un système de transmission d'images de télévision par l'intermédiaire d'un canal à bande passante limitée impliquant un traitement de réduction de la quantité d'informations à transmettre. Un tel système comprend d'une part un étage d'émission incluant dans sa partie codage un dispositif conforme au mode de réalisation qui vient d'être décrit et d'autre part un étage de réception incluant dans sa partie décodage un dispositif effectuant, par rapport audit dispositif précédent, un traitement inverse de restitution d'images à haute définition. L'invention concerne également de tels étages d'émission et de réception, comprenant respectivement un dispositif de codage et un dispositif de décodage tel que mentionnés.

La figure 3 montre un exemple de réalisation préférentiel du dispositif de décodage effectuant ce traitement inverse, qui comprend tout d'abord un circuit 350 de démultiplexage des informations transmises. Ce circuit de démultiplexage 350 est suivi d'une part d'un circuit 360 de décodage spatial et d'interpolation temporelle et d'autre part d'un circuit 370 de décodage des informations d'interpolation, et enfin d'un circuit 380 de régénération du signal vidéo entrelacé.

Le circuit 360 reçoit du circuit de démultiplexage 350 d'une part les trames séquentielles $S_n$ de sortie du commutateur 242 ayant subi le codage spatial effectué par le circuit 120, et d'autre part le vecteur de déplacement DS sélectionné pour chaque bloc des images et codé. Cet étage 360, représenté dans un mode particulier de réalisation sur la figure 4, comprend lui-même d'une part un circuit de décodage spatial 410, qui reçoit les trames $S_n$ et délivre des trames $C^1_n$ qui sont des trames impaires correspondant aux trames impaires $I^1_n$, et d'autre part un circuit 420 de décodage d'informations de déplacement, qui reçoit les vecteurs de déplacement DS sélectionnés et codés et délivre des vecteurs de déplacement décodés. Comme le codage spatial, le décodage spatial est, de façon similaire, réalisé comme indiqué par exemple dans le brevet US-A- 4394774 déjà cité.

Un circuit 430 d'interpolation temporelle compensé en mouvement reçoit d'une part ces vecteurs décodés, d'autre part les trames $C^1_n$ de sortie du circuit de décodage 410, et également les trames $C^1_{n-1}$ délivrées précédemment par ce circuit 410 et retardées par un circuit à retard 440 pour être fournies au circuit 430 en synchronisme avec les trames $C^1_n$. Ce circuit 430 comprend des circuit à retard variable 431 et 432, un additionneur 433, et un diviseur par deux 434.

Plus précisément, les circuits à retard variable 431 et 432, recevant respectivement les trames $C^1_n$ et $C^1_{n-1}$, fournissent à l'additionneur 433, pour chaque point de la trame $R^2_{n-1}$ ( x,y) à reconstituer, respectivement les signaux $C^1_n(x+DH, y+DV)$ et $C^1_{n-1}(x-DH, y-DV)$ ; DH et DV sont, on le rappelle, les composantes horizontale et verticale du vecteur de déplacement sélectionné DS, qui, après transmission, a été décodé par le circuit 420 pour le bloc auquel appartient le point de coordonnées spatiales (x,y). L'additionneur 433, qui délivre le signal $C^1_{n-1}(x-DH, y-DV) + C^1_n(x+DH, y+DV)$, est suivi d'un diviseur 434 de ce résultat par deux, qui délivre la trame interpolée $R^2_{n-1}$. Un circuit 450 de récupération de trame impaire délivre la trame transmise correspondante $R^1_{n-1}$, avec un retard prévu pour compenser celui introduit par le circuit 430. Dans le cas où l'interpolation temporelle a été jugée non satisfaisante par le circuit 130 du dispositif de codage, le circuit de décodage 370 remplace le bloc interpolé par les données de correction de la trame $I^2_{n-1}$, qui ont été codées, transmises et décodées par le circuit de décodage 370. Le circuit 380 de régénération du signal vidéo entrelacé reçoit du circuit de décodage 360 la trame $R_n^1$ et du circuit de décodage 370 la trame $R_n^2$ et multiplexe ces données trame par trame de manière à reconstituer un signal vidéo entrelacé constitué des trames impaires $R_n^1$ et des trames paires $R_n^2$.

Dans la variante de dispositif de codage d'images représentée sur la figure 1 à l'aide de la connexion supplémentaire 150 en trait interrompu, les informations additionnelles de sortie du circuit 130 sont fournies, pour multiplexage, non plus en aval du circuit de codage spatial 120 mais en amont, par l'intermédiaire de ladite connexion. Cette modification simplifie la réalisation d'ensemble puisque la totalité des moyens de codage spatial est maintenant mise en commun pour traiter soit l'image séquentielle, en mode dit normal, soit la trame d'origine associée aux informations additionnelles.

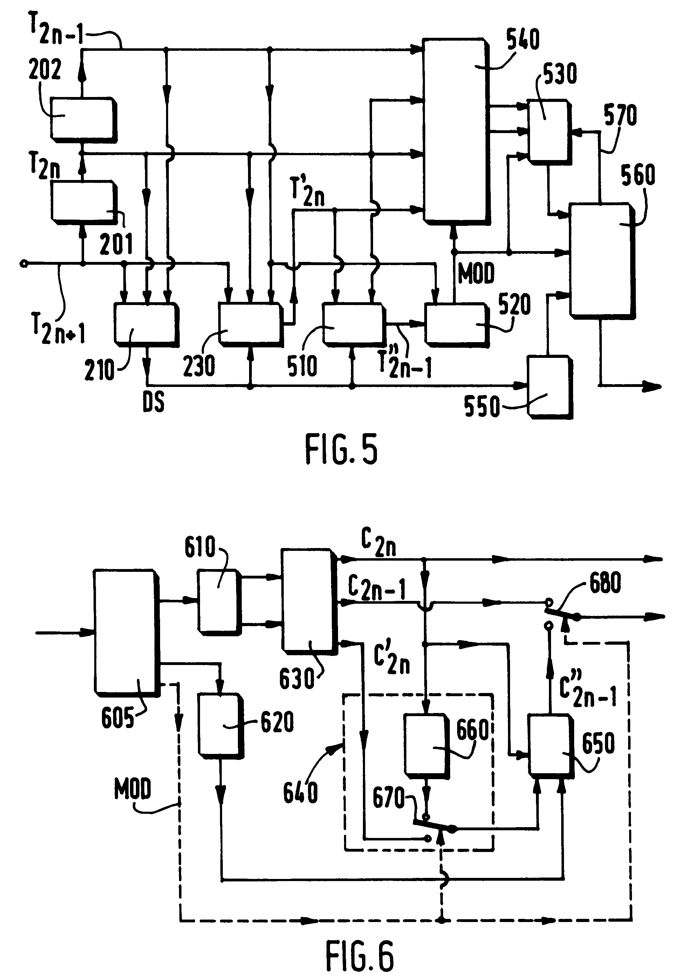

Dans le cadre de la variante ainsi proposée, l'étage d'estimation de mouvement est maintenant représenté sur la figure 5. Comme précédemment, trois trames consécutives du type $I_{n-1}^2$, $I_n^1$, $I_n^2$, qu'on appellera ici $T_{2n-1}$, $T_{2n}$, $T_{2n+1}$ selon une notation tout à fait évidente, sont présentées aux circuits à retard 201 et 202, inchangés, puis, par l'intermédiaire de ceux-ci, au circuit d'estimation de mouvement 210. Un vecteur de mouvement DS est alors calculé pour chaque bloc d'image par ce circuit d'estimation 210 (identique au précédent), à partir desdites trames $T_{2n-1}$, $T_{2n}$, $T_{2n+1}$. Le circuit de conversion séquentielle 230 utilise comme précédemment le vecteur DS pour calculer une trame $T'_{2n}$ dont les lignes viennent compléter la trame d'origine $T_{2n}$ (entrelacée) pour former l'image séquentielle $S_n$ transmise.

Les deux images $S_{n-1}$ et $S_n$, constituées des paires de trames $(T_{2n-2}, T'_{2n-2})$ et $(T_{2n}, T'_{2n})$ apparues successivement comme indiqué ci-dessus, sont alors interpolées temporellement dans la direction du mouvement pour fournir une nouvelle trame $T''_{2n-1}$ correspondant spatialement et temporellement à la trame d'origine $T_{2n-1}$. Cette opération est réalisée par un circuit 510 d'interpolation temporelle, en tout point similaire au circuit 430 d'interpolation temporelle de la figure 4 et recevant le vecteur DS pour la commande des retards.

Un circuit 520 de contrôle d'erreur d'interpolation évalue alors l'erreur entre la trame interpolée $T''_{2n-1}$ et la trame d'origine $T_{2n-1}$ et conduit à une mesure de distorsion qui constitue un critère de sélection de mode de transmission par bloc. Deux modes de transmission particuliers sont en effet définis par bloc : un mode interpolé, un mode non interpolé. Dans le premier, un bloc de l'image $S_n$ $(=T_{2n} + T'_{2n})$, de taille 8 x 8 par exemple, est transmis (c'est à dire, en fait, deux sous-blocs appartenant aux trames $T_{2n}$ et $T'_{2n}$ respectivement). Dans le deuxième mode, les lignes du bloc $S_n$ appartenant à la trame $T'_{2n}$ ne sont pas transmises mais remplacées par les lignes de la trame précédente $T_{2n-1}$ leur correspondant spatialement. Les deux sous-blocs appartenant aux trames $T_{2n}$ et $T_{2n-1}$ de parités différentes s'imbriquent naturellement (les trames étant entrelacées) pour former un bloc complet. Chaque bloc, constitué dans un cas comme dans l'autre de deux sous-blocs, est alors codé spatialement dans un circuit de codage spatial 530 de type classique, en notant toutefois qu'on préfère, pour des raisons d'efficacité, coder séparément chacun des deux sous-blocs dans le cas du mode non interpolé où le mouvement intertrame n'est pas négligeable. On notera que le deuxième mode n'est sélectionné que lorsque la qualité de l'interpolation s'avère insuffisante, c'est-à-dire lorsque la distorsion mesurée sur le sous-bloc appartenant à la trame $T_{2n-1}$ (tel que défini ci-dessus) est trop grande.

La sélection des blocs ou sous-blocs est réalisée par un multiplexeur 540, commandé lui-même par un signal MOD délivré par le circuit 520 de contrôle d'erreur d'interpolation. Un circuit de codage 550 assure le codage spécifique du vecteur de mouvement DS. Les informations générées par le circuit 530 de codage spatial des données vidéo et par ce circuit 550, ainsi que le mode d'interpolation, sont rangés alors, avant transmission, dans une mémoire-tampon 560, dont l'état de remplissage rétroagit sur les paramètres de codage spatial, par l'intermédiaire de la connexion 570, pour assurer une régulation du débit des informations transmises en sortie de cette mémoire. Cette mémoire assure également le multiplexage des données à transmettre et constitue donc avec le multiplexeur 540 l'étage de multiplexage dans la réalisation de la figure 5.

Cette réalisation de la figure 5 présente divers avantages. Par exemple, du fait du multiplexage des informations additionnelles en amont du circuit de codage spatial, on atteint une plus grande simplicité de réalisation, puisque les organes de codage spatial peuvent être mis en commun pour traiter soit l'image séquentielle, en mode interpolé, soit la trame d'origine associée aux informations additionnelles, en mode non interpolé. Par ailleurs, dans la variante ainsi proposée, la quantité d'informations additionnelles nécessaire est prise en compte lors de la régulation de débit assurée par la mémoire-tampon.

Les modifications introduites dans le dispositif de codage dans le cadre de cette variante conduisent à des modifications correspondantes dans le dispositif de décodage, représenté sur la figure 6. Sur cette figure, les données transmises sont d'abord reçues par une mémoire-tampon 605 assurant également le démultiplexage des données reçues. Ces données sont ensuite traitées selon des traitements inverses de ceux réalisés au codage. Les signaux vidéo et les informations de service (vecteur de déplacement DS, mode d'interpolation MOD) sont décodés par les circuits de décodage 610 et 620 respectivement, par l'intermédiaire d'un démultiplexeur 630 dans le cas du circuit 610, de façon à délivrer des trames $C_{2n-1}$, $C_{2n}$, et $C'_{2n}$.

Les traitements diffèrent alors selon que le mode est interpolé ou non. Dans le cas du mode non interpolé, les données relatives aux sous-blocs de la trame $C'_{2n}$ qui correspond à la trame $T'_{2n}$ n'ont pas été transmises. Le sous-bloc est donc recalculé par un simple filtrage vertical de la trame $C_{2n}$ codée qui correspond à la trame $T_{2n}$ entièrement transmise, effectué par un circuit de filtrage 640. Les échantillons correspondant à l'image n, c'est-à-dire aux trames codées $C_{2n}$ et $C'_{2n}$ éventuellement reconstituée, sont interpolés temporellement pour délivrer une trame $C''_{2n-1}$ à l'aide d'un circuit d'interpolation temporelle 650 semblable au circuit 510. Dans le cas du mode non interpolé, les sous-blocs de la trame $C_{2n-1}$ (trame $T_{2n-1}$ codée) ont été transmis et viennent donc se substituer aux sous-blocs de $C''_{2n-1}$ précédemment calculés dans le circuit 650. Le circuit de filtrage 640 comprend un commutateur 670 commandé par l'information de service MOD pour sélectionner soit directement la trame $C'_{2n}$, soit la trame $C_{2n}$ filtrée dans un circuit de filtrage vertical 660, et fournir la trame ainsi sélectionnée au circuit 650 d'interpolation temporelle. Un commutateur 680sélectionne finalement, sur commande de l'information de service MOD, soit la trame $C_{2n-1}$, soit la trame $C''_{2n-1}$ de sortie du circuit 650, et cette trame sélectionnée ainsi que la trame $C_{2n}$ sont maintenant disponibles.

On remarquera enfin, avant transmission, que, lorsque la composante verticale du déplacement est impaire, la trame $T'_{2n}$ est calculée par simple interpolation verticale de $T_{2n}$. Dans ce cas, dans le dispositif de codage, on peut substituer au mode de transmission d'un bloc dans l'image composée des trames $T_{2n}$ et $T'_{2n}$ un mode supplémentaire de transmission d'un sous-bloc appartenant à la trame $T_{2n}$. La quantité d'information à transmettre est ainsi réduite, et l'interpolation verticale est effectuée au niveau du dispositif de décodage, dans le circuit de filtrage 640. La transmission d'une information de service relative à ce mode supplémentaire de transmission n'est pas utile puisque ce mode est signalé par la parité de la composante verticale du vecteur de mouvement DS qui, lui, est transmis.

## ANNEXE

(1)

$$DIS(V_x, V_y) = \sum_{bloc} [P_n^1(x, y)$$

$$- \frac{1}{2}(P_n^2(x+V_x, y+V_y) + P_{n-1}^2(x-V_x, y-V_y))]^2$$

(2)

$$S_n(x,y) = \frac{1}{2}[I_{n-1}^2(x - DH, y - DV) + I_n^2(x + DH, y + DV)]$$

## Revendications

1. Dispositif de codage d'images de télévision constituées de trames entrelacées et organisées en blocs d'informations, comprenant notamment un étage d'estimation de mouvement (110), un étage de contrôle d'estimation de mouvement (130), un étage de codage (120), et un étage de multiplexage (140), caractérisé en ce que l'étage d'estimation de mouvement comprend :
    (1) des moyens (201, 202, 210) de détermination de vecteurs de déplacement, prévus pour recevoir lesdites images d'origine et délivrer des vecteurs de déplacement associés à chacun desdits blocs et comprenant eux-mêmes deux circuits à retard (201, 202) pour la synchronisation de trois trames successives et un circuit d'estimation de mouvement (210) incluant lui-même trois circuits d'interpolation verticale (221, 222, 223) et un circuit (220) de détermination de vecteurs de déplacement par une méthode telle que celle de corrélation par bloc ;
    (2) des moyens (230) de conversion de format, comprenant eux-mêmes un circuit d'interpolation intra-trame (231, 232, 233, 234, 235, 236) et un circuit d'interpolation inter-trames (237, 238) étant sélectionnés l'un ou l'autre selon la parité de la composante verticale de chaque vecteur de déplacement déterminé, pour délivrer, à partir des images d'origine et desdits vecteurs de déplacement qui leur sont associés par bloc, des trames séquentielles distinctes selon la nature desdits vecteurs de déplacement.

2. Dispositif selon la revendication 1, caractérisé en ce que, lesdites trois trames successives étant appelées

7

$T_{2n-1}$, $T_{2n}$, $T_{2n+1}$, il comprend également :

(a) un circuit d'interpolation temporelle (510), recevant d'une part la trame de sortie $T_{2n}$ du premier circuit à retard et la trame de sortie $T'_{2n}$ desdits moyens de conversion de format (230) et d'autre part le vecteur de déplacement DS de sortie du circuit d'estimation de mouvement (210) pour délivrer une nouvelle trame $T''_{2n-1}$ correspondant spatialement et temporellement à ladite trame $T_{2n-1}$, compte tenu de la direction du mouvement ;

(b) un circuit de contrôle d'erreur d'interpolation (130), recevant ladite trame d'origine $T_{2n-1}$ et ladite nouvelle trame interpolée $T''_{2n-1}$ pour délivrer un signal MOD d'indication de mode de transmission lié à la qualité de l'interpolation réalisée et destiné à commander lesdits étages de codage et de multiplexage.

3. Système de transmission d'images de télévision par l'intermédiaire d'un canal à bande passante limitée impliquant un traitement de réduction de la quantité d'informations à transmettre, comprenant de part et d'autre du canal de transmission respectivement un étage d'émission et un étage de réception, caractérisé en ce que ledit étage d'émission comprend un dispositif de codage selon l'une des revendications 1 et 2.

4. Etage d'émission pour système de transmission d'images de télévision par l'intermédiaire d'un canal à bande passante limitée impliquant un traitement de réduction de la quantité d'informations à transmettre, caractérisé en ce qu'il comprend un dispositif de codage selon l'une des revendications 1 et 2.

5. Système de transmission d'images de télévision selon la revendication 3, caractérisé en ce que l'étage de réception comprend un dispositif de décodage comprenant lui-même un ciruit (350) de démultiplexage des informations transmises par le canal de transmission, un circuit (360) de décodage spatial et d'interpolation temporelle recevant dudit circuit de démultiplexage les trames transmises et les informations de service, un circuit (370) de décodage des informations additionnelles, et un circuit (380) de régénération du signal vidéo entrelacé, et en ce que, dans ce dispositif de décodage, le circuit de décodage spatial comprend lui-même un circuit (410) de décodage spatial recevant les trames transmises, un circuit (420) de décodage d'informations de déplacement recevant les vecteurs de déplacement sélectionnés et codés, un circuit (430) d'interpolation temporelle à partir, d'une part, de deux trames successivement décodées fournies l'une par le circuit de décodage spatial et l'autre par un circuit à retard (440) placé en sortie dudit circuit de décodage, et, d'autre part, des vecteurs de déplacement décodés de sortie dudit circuit de décodage d'informations de déplacement, et un circuit (450) de récupération de la trame impaire transmise, les sorties de ce circuit de récupération et du circuit d'interpolation temporelle étant envoyées vers le circuit de régénération du signal vidéo entrelacé.

6. Etage de réception pour un système de transmission d'images de télévision selon la revendication 5.

7. Dispositif de décodage équipant, dans un système de transmission d'images de télévision, un étage de réception selon la revendication 6.

## Patentansprüche

1. Codieranordnung für Fernsehbilder, die aus verschachtelten Halbbildern bestehen und in Informationsblöcken organisiert sind, insbesondere mit einer Bewegungsschätzungsstufe (110), einer Bewegungsschätzungsteuerstufe (130), einer Codierstufe (120) und einer Multiplexstufe (140), dadurch gekennzeichnet, daß die Bewegungsschätzungsstufe folgende Elemente enthält:

(1) Mittel (201, 202, 210) zum Bestimmen der Verschiebungsvektoren, zum Empfangen der Ursprungsbilder und zum Ausgeben der jedem der Blöcke zugeordneten Verschiebungsvektoren, mit zwei Verzögerungsschaltungen (201, 202) für die Synchronisation von drei aufeinanderfolgenden Halbbildern und mit einer Bewegungsschätzungsschaltung (210), die selbst drei Vertikalinterpolationsschaltungen (221, 222, 223) und eine Schaltung (220) zum Bestimmen der Verschiebungsvektoren mit einem Verfahren wie dem der Blockkorrelation enthält,

(2) Mittel (230) zur Bildformatumsetzung, mit einer Innerhalbbildinterpolationsschaltung (231, 232, 233, 234, 235, 236) und mit einer Zwischenhalbbildinterpolationsschaltung (237, 238), wobei die eine oder die andere Interpolationsschaltung entsprechend der Parität der Vertikalkomponente jedes bestimmten Verschiebungsvektors gewählt wird, um ausgehend von den Ursprungsbildern und von den Verschiebungsvektoren, die ihr blockweise zugeordnet sind, unterschiedene sequentielle Halbbilder nach der Art der Verschiebungsvektoren zu liefern.

2. Anordnung nach Anspruch 1, <u>dadurch gekennzeichnet</u>, daß die drei aufeinanderfolgenden Halbbilder mit $T_{2n-1}$, $T_{2n}$, $T_{2n+1}$ bezeichnet werden und diese Anordnung enthält ebenfalls folgende Elemente:

(a) eine zeitliche Interpolationsschaltung (510), die einerseits das Ausgangshalbbild $T_{2n}$ der ersten Verzögerungsschaltung und das Ausgangshalbbild $T'_{2n}$ der Bildformatumsetzungsmittel (230) und andererseits den Verschiebungsvektor DS am Ausgang der Bewegungsschätzungsschaltung (210) zum Liefern eines neuen Halbbildes $T''_{2n-1}$ in räumlicher und zeitlicher Übereinstimmung mit dem Halbbild $T_{2n-1}$ unter Berücksichtigung der Bewegungsrichtung empfängt,

(b) eine Interpolationsfehlersteuerschaltung (130), die das Ursprungshalbbild $T_{2n-1}$ und das neue interpolierte Halbbild $T''_{2n-1}$ zum Ausgeben eines MOD-Signals zum Anzeigen der mit der Qualität der verwirklichten Interpolation zusammenhängenden Übertragungsbetriebsart empfängt und zum Steuern der Codierungs- und Multiplexstufen dient.

3. Fernsehbildübertragungssystem über ein Kanal mit einem beschränkten Durchlaßband, das eine Reduktionsbearbeitung der zu übertragenden Informationsmenge erforderlich macht, das an beiden Seiten des Übertragungskanals eine Emissionsstufe bzw. eine Empfangsstufe enthält, <u>dadurch gekennzeichnet</u>, daß die Emissionsstufe eine Codierungsanordnung nach einem der Ansprüche 1 und 2 enthält.

4. Emissionsstufe für das Fernsehbildübertragungssystem über ein Kanal mit einem beschrankten Durchlaßband, das eine Reduktionsbearbeitung der zu übertragenden Informationsmenge erforderlich macht, <u>dadurch gekennzeichnet</u>, daß die Stufe eine Codierungsanordnung nach einem der Ansprüche 1 und 2 enthält.

5. Fernsehbildübertragungssystem nach Anspruch 3, <u>dadurch gekennzeichnet</u>, daß die Empfangsstufe eine Codierungsanordnung mit einer Demultiplexschaltung (350) zum Demultiplexen der über den Übertragungskanal übertragenen Informationen, eine Schaltung (360) zum räumlichen Decodieren und zum zeitlichen Interpolieren, die aus der Demultiplexschaltung die übertragenen Halbbilder und die Hilfsinformationen empfängt, eine Schaltung (370) zum Decodieren der Zusatzinformationen, und eine Schaltung (380) zum Regenerieren des verschachtelten Videosignals, und daß in der Decoderanordnung die räumliche Decodierschaltung eine räumliche Decodierschaltung (410), die die übertragenen Halbbilder empfängt, eine Schaltung (420) zum Decodieren der Verschiebungsinformationen, die die gewählten und codierten Verschiebungsvektoren empfängt, eine Schaltung (430) für die zeitliche Interpolation ausgehend einerseits von den zwei aufeinanderfolgenden decodierten Halbbildern, von denen ein Halbbild von der räumlichen Codierschaltung und das andere von einer Verzögerungsschaltung (440) am Ausgang der Decoderschaltung geliefert wird, und andererseits von decodierten Verschiebungsvektoren am Ausgang der Decodierschaltung für Verschiebungsinformationen, und eine Schaltung (450) zum Rekuperieren des übertragenen ungeradzahligen Halbbildes enthält, wobei die Ausgänge dieser Rekuperationsschaltung und der zeitlichen Interpolationsschaltung auf die Regenerationsschaltung des verschachtelten Videosignals übertragen werden.

6. Empfangsstufe für ein Fernsehbildübertragungssystem nach Anspruch 5.

7. Decoderanordnung mit einer Empfangsstufe nach Anspruch 6 in einem Fernsehbildübertragungssystem .

## Claims

1. A device for coding television pictures constituted by interlaced fields and organized in blocks of information components, comprising in particular a motion estimating stage (110), a motion estimation control stage (130), a coding stage (120), and a multiplexing stage (140) characterized in that the motion estimating stage comprises:

(1) displacement vector-determining means (201, 202, 210), arranged to receive said original pictures and to supply displacement vectors associated with each one of said blocks, and comprising two delay circuits (201, 202) for the synchronization of three consecutive fields and a motion estimation circuit (210) including three vertical interpolation circuits (221, 222, 223), and a displacement vector determining circuit (220) using a method such as block matching;

(2) format converting means (230) comprising an intra-field interpolation circuit (231, 232, 233, 234, 235, 236) and an inter-field interpolation circuit (237, 238) selected one or the other in dependence on the parity of the vertical component of each displacement vector determined to supply, on the basis of original pictures and said displacement vectors which are block-wise associated with them, distinct sequential fields in accordance with the nature of said displacement vectors.

2. A device as claimed in Claim 1, characterized in that, with the three successive fields being referred to as $T_{2n-1}$, $T_{2n}$, $T_{2n+1}$, it also comprises:

(a) a temporal interpolation circuit (510) receiving the output field $T_{2n}$ from the first delay circuit (201) and the output field $T'_{2n}$ from the format conversion means, and the displacement vector DS from the output of the motion estimation circuit (210) for supplying a new field $T''_{2n-1}$ corresponding spatially and temporally to said field $T_{2n-1}$, taking the direction of motion into account;

(b) a circuit (130) for checking the interpolation error receiving said original field $T_{2n-1}$ and said new interpolated field $T''_{2n-1}$ for supplying a transmission mode indication signal MOD related to the quality of the interpolation realized and intended to control said coding and multiplexing stages.

3. A system of transmitting television pictures <u>via</u> a channel of limited bandwidth which requires a processing operation to reduce the quantity of information components to be transmitted, comprising on either side of the transmission channel a transmission stage and a receiving stage, respectively, characterized in that said transmission stage includes a coding device as claimed in any one of Claims 1 and 2.

4. A transmission stage for the system of transmitting television pictures <u>via</u> a channel of limited bandwidth requiring a processing operation for reducing the quantity of information components to be transmitted, characterized in that it includes a coding device as claimed in any one of Claims 1 and 2.

5. A television picture transmission system as claimed in Claim 3, characterized in that the receiving stage includes a decoding device which itself includes a demultiplexing circuit (350) for the information components transmitted <u>via</u> the transmission channel, a spatial and temporal interpolation decoding circuit (360) receiving from said demultiplexing circuit the transmitted fields and the service information components, a circuit (370) for decoding the additional information components and a circuit (380) for recovering the interlaced video signal, and in that, in the decoding device, the spatial decoding circuit includes a spatial decoding circuit (410) receiving the fields transmitted, a displacement information components decoding circuit (420) receiving the selected and encoded displacement vectors, a temporal interpolation circuit (430) based on the two successively decoded fields one of which is supplied by the spatial decoding circuit and the other by a delay circuit (440) positioned at the output of said decoding circuit and also the decoded displacement vectors from the output of said displacement information components decoding circuit, and a circuit (450) for recovering the odd transmitted field, the output values of this recovery circuit of the temporal interpolation circuit being conveyed towards the circuit for recovering the interlaced video signal.

6. A receiving stage for a television picture transmission system as claimed in Claim 5.

7. A decoding device equipping, in a television picture transmission system, a receiving stage as claimed in Claim 6.

FIG.1

FIG.3

FIG.4

FIG.2

FIG.5

FIG.6